# EUROPEAN PATENT APPLICATION

(11) **EP 4 331 721 A1**
(43) Date of publication of application: **06.03.2024**
(21) Application number: 22193187.6
(22) Date of filing: 31.08.2022
(51) Int. Cl.: B01J 21/04, B01J 21/06, B01J 23/34, B01J 29/70, B01J 21/18, B01J 35/00, A62D 3/38, A62D 9/00, B01D 53/88

(54) **CATALYTIC SYSTEM WITH PHOTOCATALYST AND GAS DEPOLLUTION APPARATUS CONTAINING THE SAME**

(71) Applicant: Calistair SAS, 77000 Vaux-le-Pénil (FR)
(72) Inventor: TARANTO, Jérôme, 77000 Vaux-le-Pénil (FR); CARVALHO, Alexandre, 77000 Vaux-le-Pénil (FR); GOLAMAULLY, Azdeen, 77000 Vaux-le-Pénil (FR)
(74) Representative: Kröncke, Rolf

(57) **Abstract**

The present invention relates in a first aspect to a catalytic system comprising a catalytic composition and a carrier, whereby the carrier represents the support for the catalytic composition. Namely, the catalytic composition comprises the mixture of a first catalyst having photocatalytic activity, preferably TiO2, a second catalyst which is different to the first catalyst being a low temperature catalyst, preferably MnO, and an adsorbent, preferably zeolite A, whereby the support is a porous ceramic catalyst carrier, preferably an open pore foamed ceramic carrier. Moreover, the present invention relates to a catalytic device comprising the catalytic system mentioned. In addition, a gas depollution apparatus is provided, comprising the catalytic device or the catalytic system according to the present invention as well as a method for preparing the catalytic system according to the present invention.

## Description

The present invention relates in a first aspect to a catalytic system comprising a catalytic composition and a carrier, whereby the carrier represents the support for the catalytic composition. Namely, the catalytic composition comprises the mixture of a first catalyst having photocatalytic activity, a second catalyst which is different to the first catalyst being a low temperature catalyst and an absorbent, whereby the support is a porous ceramic catalyst carrier. Moreover, the present invention relates to a catalytic device comprising the catalytic system mentioned. In addition, a gas depollution apparatus is provided, comprising the catalytic device or the catalytic system according to the present invention as well as a method for preparing the catalytic system according to the present invention.

### Prior Art

Air pollution is a major aspect in various fields and applications. Namely, air depollution or depollution of gases in general can be of various types and may be due to various reasons, for example, the pollution of gases is required in various industrial fields but also the depollution of air by masks, including gas masks.

Typically contaminants within gases, especially within air, may be of various types including particles or solids, gaseous or volatile chemical contaminants as well as biological contaminants. Typical examples of solids include carbon black or other small particles present in air, while volatile chemical contaminants may be of various types, including harmful compounds, e. g. like propellants but also compounds useful as chemical weapons. Biological contaminants may include microorganisms such as bacteria, fungi or other types of microorganisms like virus, phages and the like useful in biological weapons as well.

Gaseous or volatile substances are for example the so called volatile organic compounds (VOCs). VOCs are usually defined as compounds containing at least one carbon atom and one or more atoms of hydrogen, whereby other heteroatoms may be present, including halogen, oxygen, sulphur, phosphor and/or silicon. The VOCs have typically a vapor pressure of at least 0,01 kPa and a temperature of 20 °C or certain volatility under certain circumstances. Very volatile compounds are known and sometimes included in the general term of "volatile organic compounds". In the present case, volatile compounds are used synonymously with total volatile organic compounds including the volatile organic compounds and the very volatile compounds. Examples of the compounds included in this term are contaminants like formaldehyde, benzene, ethanol, acetone, octane. However, whereas inorganic carbonates or bicarbonates are usually not considered to be VOCs.

Various possibilities of depolluting gases are known in the art, including mechanical depollution means as well as physical or chemical methods. Typical mechanical means include filter systems, like HEPA filters or the like. However, in particular, with respect to volatile organic compounds, the mechanical filter systems are not efficient against airborne chemical contaminants. This is also true for biological contaminants, including microorganisms having a size between 0,01 and 1 micrometer. Moreover, these filters require cleaning and replacement after a certain time and, in addition, the presence of the components in the filter can lead to the production of harmful or toxic substances, e. g. in the case of depolluting microorganisms. A typical example is the formation of toxic substances from bacteria, like endotoxins formed after lysis of the bacteria present in the filter system. In addition, some microorganisms may survive for a long time in the filter system. Another issue with mechanical filter systems is a saturation of the filter system resulting in an increased flow resistance. Other disadvantages include the development odors, a decrease of the air flow, increase of the pressure drop as well as formation of biofilms on the filter. Thus, the mechanical filter systems may be part of a filter system, however, not sufficient for depollution of gases.

Other systems are known in the art, like the use of plasma, ionization, ozonisation or catalysis. Catalysts are used in many industrial fields, whereby the catalyst catalyzes chemical reactions, which means it increases the rate of a chemical reaction in a direction without being consumed in the reaction. Catalysts are widely used for depolluting gases like air but also exhaust or process gases in industry. Catalysts can also be used in air conditioning system or air purifying systems for cleaning ambient air, but also in hospitals or other places and are also useful in gas masks and the like.

Catalysts may be used singly or combined with one or more catalysts depending on the reaction to be catalyzed.

Various types of catalysts exist, e. g. catalyst having a photocatalytic activity are known in the art. They are referred to as photocatalysts and usually are UV-activatable. That is, said photocatalysts are activated by UV-radiation typically with a wavelength of about 100 nm to 400 nm, thus, enabling catalytic reaction of compounds accordingly.

For example, by reacting water to highly reactive OH radicals, contaminants are decontaminated. Another typical way to decontaminate the contaminants is the generation of reactive oxygen species (ROS), like the superoxide anion from molecular oxygen which eventually reacts with a chemical and biological contaminants destroying e. g. the membranes and lipid bilayers of virus and other microorganisms. That is, the use of photocatalysts usually requires a source of UV-radiation for activation of the catalysts accordingly.

Also the use of a combination of different types of catalysts is known in the art. For example, the catalysts are arranged at distinct stages being spatially apart from each other containing typical catalysts like titanium dioxide, manganese dioxide as well as zeolite.

For example, catalytic compositions as described above are shown in CN 106582265 A and CN 105597528 A. Also, an example of a photocatalytic device and photocatalytic composition for gas depollution is described in WO 2021/130388 A1. Therein a method and a catalytic device comprising a first catalyst having photocatalytic activity, a second low temperature catalyst and an absorbent like zeolite is described, whereby the components are coated as a slurry onto a solid grid like carrier.

CN 110756046 refers to a photocatalyst air purification membrane group describing a photocatalysts main body, the support consisting of porous ceramic foam, whereby the photocatalyst is coated thereon. Further, CN 110449028 refers to a circulation purifier for indoor air, wherein the photocatalytic active components are coated on catalysis plates formed from foam ceramic plates. CN 106902797 identifies lightweight foam ceramic composite material having surface coating with photocatalytic activity layer. Additional prior art is known describing photocatalysts coated on ceramic supports accordingly.

There is an ongoing need to provide suitable catalytic systems and compositions allowing depollution of gases, whereby the contaminants are of various types including chemical and biological contaminants.

In particular, it is desired to provide catalytic systems composed of the catalytic composition supported on a suitable support allowing to provide the same in individual design and dimension, whereby the catalytic system can be produced easily and inexpensive.

### Brief description of the present invention

In a first aspect, the present invention relates to a catalytic system comprising a catalytic composition and a carrier with
i) a catalytic composition comprising a mixture of
   - a first catalyst having photo catalytic activity,
   - a second catalyst, which is a different molecule than the first catalyst, being a low temperature catalyst, and
   - an adsorbent and
ii) a support being a porous ceramic catalyst carrier.

A further aspect, a catalytic device comprising the catalytic system according to the present invention is provided. In addition, a gas depolluting apparatus comprising the catalytic device according to the present invention or the catalytic system according to the present invention is disclosed. Further, a method for preparing the catalytic system according to the present invention comprising the steps of providing the described catalytic composition coating the same on a ceramic carrier with the solution containing the catalytic system and drying the same is disclosed. Finally, the use of the catalytic system or the catalytic device or the apparatus for depollution of VOCs but also other contaminants like chemical and biological contaminants is disclosed.

### Brief description of the drawings

Figure 1 shows a typical example of a porous foamed ceramic carrier useful according to the present invention.
Figure 2 shows the CO2 production from ethanol degradation as functional operation time over catalyst, whereby LTC identifies the catalyst supported on 10 ppi ceramic disc for two samples. Reaction conditions are ambient pressure, gas in the recirculation mode, injections of 4,4 µl of ethanol equivalent to 2300 ppm.
Figure 3: Graph showing the conversion of ethanol to CO₂ over the time using the catalytic system according to the present invention.

### Detailed description of the present invention

In a first aspect, the present invention provides a catalytic system comprising a catalytic composition and a carrier with
i) a catalytic composition comprising a mixture of
   - a first catalyst having photo catalytic activity,
   - a second catalyst, which is a different molecule than the first catalyst, being a low temperature catalyst, and
   - an adsorbent and
ii) a support being a porous ceramic catalyst carrier.

As used herein, the term "catalyst having photocatalytic activity" refers to a catalyst being a substance effectually capable of being photoactivated by certain radiation, as described in the following.

Of note, the first catalyst and the second catalyst are different molecules or compounds. That is, the first catalyst and the second catalyst are different in the chemical composition. In other words, due to the chemical composition, the first and second catalyst cannot be identical compounds having different properties, like different particle sizes, crystal structure or the like. For example, the first catalyst and the second catalyst may be titanium dioxide in different shapes accordingly.

Further, the second catalyst is a low temperature catalyst. The term low temperature catalyst is hereby used to differentiate the type of catalyst from thermal catalyst, which activates at relative high temperatures of usually 500 °C to 1200 °C. The low temperature catalyst according to the present invention is not only catalytically active at a relatively low temperature, but is activated by light and relatively low temperature. For clarification, a photocatalyst which is capable of being photoactivated at ambient temperature is no low temperature catalyst, because it is not activated by the calorific energy of the ambient temperature, but by the radiation. A low temperature catalyst preferably is a catalyst already being catalytically activated and, thus, active at temperatures lower than 100 °C, more preferably at temperatures lower than 50 °C, most preferably already at room temperature of 20 °C. Of course, at high temperatures the catalyst may be active as well. Low temperature catalysts are for example metal oxides, like nickel oxide or cerium oxide. In a preferred embodiment of the invention, the second catalyst is manganese oxide, being an efficient low temperature catalyst. In an embodiment, the manganese monoxide is not or substantially not contaminated with manganese dioxide, e. g. the amount of manganese dioxide is lower than 5 %, preferably lower than 1 %, most preferably lower than 0.1 % of the total mass of manganese monoxide used as second catalyst. In an embodiment, no manganese dioxide is present. The manganese monoxide, e. g. in crystalline form, allows the generation of highly reactive radical species when in contact with oxygen, e. g. present in air. Preferably, the temperature is higher than 35 °C, like in between 35 °C and 55 °C, more preferably between 45 °C and 50 °C.

In an embodiment, the relative humidity of the gas to be depolluted, like air, is between 30 % and 80 %, preferably 50 %. This allows very efficient generation of radical species.

The adsorbent is preferably a compound having a large specific surface area, preferably of at least 300 m²/g, more preferably of at least 500 m²/g, most preferably of at least 1,000 m²/g, in particular, more than 2,000 m²/g. The adsorbent can for example be activated carbon.

In a preferred embodiment, the adsorbent is a zeolite. Zeolite are microporous aluminium silicate minerals which can be naturally occurring or being prepared artificially. Preferably a hydrophilic zeolite is used, preferred embodiments include a zeolite of type A or type ZSM-5. The zeolite is preferably a synthetic zeolite, especially a synthetic zeolite of type A or ZSM-5.

Finally, the support in the catalytic system according to the present invention is a porous ceramic catalyst carrier.

The term "porous ceramic" refers to a foam of ceramic formed by impregnation of an open cells polymeric foam by a colloidal ceramic followed by thermal treatment. Ceramic foam can have many different shapes: plane, cylindrical, pleated, etc.

As said, the present inventors recognized that the combination of the catalytic composition according to the present invention, namely, the mixture of the first catalyst, the second catalyst and the adsorbent as described with a support of a porous ceramic catalyst carrier allows to produce effective catalytic systems with low costs. In addition, the use of the ceramic catalyst allows to provide a catalytic system or a catalytic device wherein the system is more stable and can be processed easier without destroying the catalytic system. Namely, the porous ceramic carrier allows to produce the catalytic system in different shapes, in particular, individually adapted to the catalytic device containing the catalytic system accordingly.

In particular, the porous ceramic support allows to cut individual shapes out of the basic catalytic system. This is in contrast to the carrier described e. g. in WO 2021/13088 which may be in form of metals and the like. The processing of this catalytic system requires specific tools for shaping and cutting. In addition, the porous ceramic according to the present invention allows a more non-destructive processing of the catalytic system accordingly. Hence, the catalytic system is particularly useful as a removable filter insert.

The skilled person is well aware of suitable porous ceramics useful according to the present invention. In an aspect according to the present invention the porous ceramic is a porous foamed ceramic carrier. Porous foamed ceramic carriers are not known in the art. So far catalysts are coated onto aluminum honeycombs, glass beads, 3D square channels ceramics or, generally, directly shaped as catalytic beads, pellets or powder.

In an embodiment of the present invention, the porous ceramic catalyst is an open porous ceramic catalyst. That means, the pores on the surface of the catalyst are open pores. In an embodiment, the catalyst or the catalytic composition is supported on 10 or 20 ppi (pores per inch) ceramic.

Further, in an embodiment, the ceramic is an alumina ceramic. Alumina ceramics are known to the skilled person. Other types of ceramics include: beryllium oxide ceramics and zirconia ceramics.

In an embodiment of the present invention the support is an alumina foamed ceramic carrier, e. g. as produced by Saint-Gobain or Drache.

The catalytic composition present in the catalytic system according to the present invention is basically a catalytic composition as described in WO 2021/130388.

That is, in an embodiment of the present invention the first catalyst having photocatalytic activity is titanium dioxide, TiO₂.

Further, the second catalyst is in an embodiment a low temperature catalyst being MnO.

The adsorbent present in the catalytic composition is in an embodiment a zeolite, in particular, zeolite A.

Preparation of the mixture of the three components may be conducted as described in WO 2021/130388. Namely, the mingling of the first catalyst, the second catalyst and the adsorbent is preferably performed before suspending them in the suspension liquid. That is, solid components, e. g. in form of a powder, of each of the components are first mingled and this mixture of the components is then introduced into the suspension liquid to form the slurry which is eventually applied to the porous ceramic catalyst.

The suspension liquid is preferably a liquid or solution in which none of the components are soluble. For example, the solvability of each of the components is below 1 g/l of the suspension liquid, like below 0.1 g/l.

The slurry can be applied to the ceramic carrier by various methods, including dipping. In an embodiment, the slurry is supplied via spray coating. Spray coating results in a very durable and consistent coating, especially without any need for providing a separate binder to the slurry. That is, in an embodiment, the composition does not contain a binder accordingly.

Surprisingly, the slurry of the catalytic composition according to the present invention does not plug the pores but the pores allow to increase the surface of the carrier increasing the amount of catalyst present. In addition, the activity of the catalytic material is not decreased. The coating of the catalytic system allows an efficient depollution as demonstrated below.

Moreover, in an embodiment, the catalytic system may comprise additionally CNT. The CNTs can be considered as a cylinder created by curling a graphene sheet having a rectangular hexagon structure. Based on the number of graphene surface layers, they are categorized into single-walled carbon nanotubes (SWCNTs), having one graphene sheet and multi-walled carbon nanotubes (MWCNTs), displaying several graphene sheets. In an embodiment, the CNT are selected from multi-walled carbon nanotubes (MWCNTs) or single-walled carbon nanotubes (SWCNTs).

The skilled person is well aware of suitable types of carbon nanotubes for use in the catalytic composition. The first catalyst, the second catalyst and the adsorbent are provided as distinct powders and mixed, e. g. by mingling, to obtain a catalytic mixture. This catalytic mixture is then mixed further with the carbon nanotubes to obtain the catalytic composition.

In an preferred embodiment, the catalytic system according to the present invention comprises a catalytic composition comprising in weight-% in regard to its total mass:
between 27 % and 30 % photo-activated titanium dioxide TiO₂,
between 11 % and 70 % of manganese monoxide MnO,
between 55 % and 59 % of synthetic hydrophilic zeolite of type A,
optionally, CNTs in amount of at most 5 weight-% based on the amount of the catalytic mixture.

The catalytic system according to the present invention demonstrates firstly the application in depollution, in particular, in depollution of volatile organic compounds as demonstrated. The ceramic represents an inert substrate with ... capacity for the catalyst, as shown. In addition, ceramic remains stable at high temperature, like above 400 °C, therefore, it is possibly to regenerate the catalyst by thermal treatment.

This is typically not possible with other supports. As they would be degraded e. g. by catalyst or temperature.

That is, the catalytic system according to the present invention combines various advantages, on the one hand, being stable at high temperature allowing regeneration by a thermal treatment, on the other hand, simple processing, e. g. cutting or individualizing the shape after production of the catalytic composition accordingly.

In a further aspect, a catalytic device is described comprising the catalytic composition according to the present invention. The catalytic device may contain at least one catalytic system according to the present invention. For example, the catalytic device may contain at least two or a multitude of catalytic systems in a row or in parallels.

According to another aspect, the invention relates to a gas depollution apparatus comprising a catalytic device according to the present invention and/or a catalytic system according to the present invention. The catalytic device and/or the catalytic system is partially provided with a designated flow path of the gas to be depolluted, preferably, the gas depollution apparatus does comprise at least one source of UV-radiation arranged in the designated flow path. Further, the gas depollution apparatus comprises a flow path, which is for example determinated by a pipe or tube or housing of the gas depollution apparatus, especially an inner wall of the housing. The gas to be depolluted into the gas depollution apparatus along the flow path and exits the apparatus through an exit opening. In an embodiment, a coarse filter is present, for example the coarse filter is a mechanical filter to filter particulate contaminants. Further, a High Efficiency Particulate Air (HEPA) or Activated Carbon (AC) filter may additionally or alternatively be assigned to the exit opening or may be provided before the exit opening in the direction of flow and beyond the catalytic device and/or the catalytic composition in the direction flow. The HEPA or AC filter serves to trap contaminants that were not destroyed by the catalytic treatment. In an embodiment, the gas depollution apparatus contains one or more treatment stages. Each treatment stage is defined by one or more catalytic devices or catalytic compositions according to the present invention being provided at least partly within the flow path.

The catalytic system is particularly useful for depollution of VOCs. However, also other harmful contaminants, in particular, chemical or biological contaminants can be treated. For example, the catalytic system or catalytic device can be used in a manifold of areas, for example to depollute air in hospitals, preferably in operation theatres or quarantine stations. Furthermore, a small version of the apparatus can be used on tables in restaurants or offices for *in situ* depollution of air being exchanged between persons sitting opposite from each other at the table. Another area is the use in gas masks. The catalytic system according to the present invention can be easily removed, that is, it may be a filter insert of a filter cartridge for gas masks or other gas depollution apparatuses. This is particularly useful for small depollution apparatuses like gas masks etc.

The present invention will be described further by way of examples without limiting the same thereto.

### Catalytic experiment

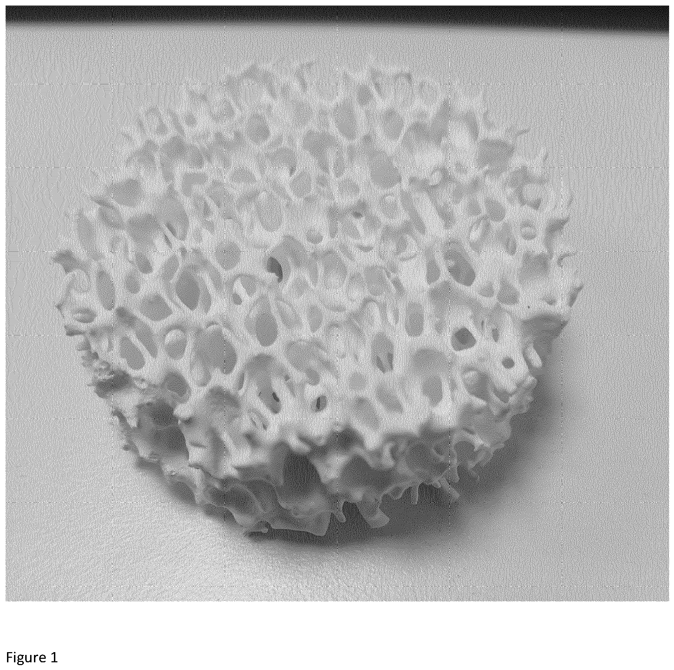

The catalytic degradation of ethanol was conducted at ambient temperature in a Pyrex photo-reactor, which was equipped with three UV lamps (λ = 375 nm) of 9.0 W. The catalyst as described in the WO 2021/130388 A1 (composition C) supported on the ceramic disk, see figure 1, was placed on the middle of the photo-reactor. The immobilization of the catalyst (composition C) of WO 2021/130388 A1 on alumina ceramic foam was performed by dip coating. In a first step, a preparation of 10 weight-% of the catalyst in an aqueous solution was prepared. The solution was kept under stirring at room temperature. Then the ceramic disc with 10 ppi was immersed in the solution for 5.0 seconds, followed by exposure to compressed air (1.5 bar) for a few seconds in order to avoid porous blocking of the ceramic by excess of the catalytic solution. The sample was dried overnight at room temperature thereafter. Thus, a ceramic disc with 10 ppi supported with the catalytic composition C was obtained. A pump with heating system injected ethanol diluted in dried air into the reactor. The kinetics of the CO₂ formation trough ethanol conversion was analyzed by CO₂ analyzer Quantex Model 906 instrument.

Prior to the reaction, in-situ pretreatment under UV light for 16h was performed to eliminate contaminants previously deposited on the prepared mixed materials. After that, the setup was purged before the injection of 4.4 pL of ethanol diluted with dried air (equivalent to 2300 ppm of ethanol). All the experiments were performed in recirculation mode.

### Results

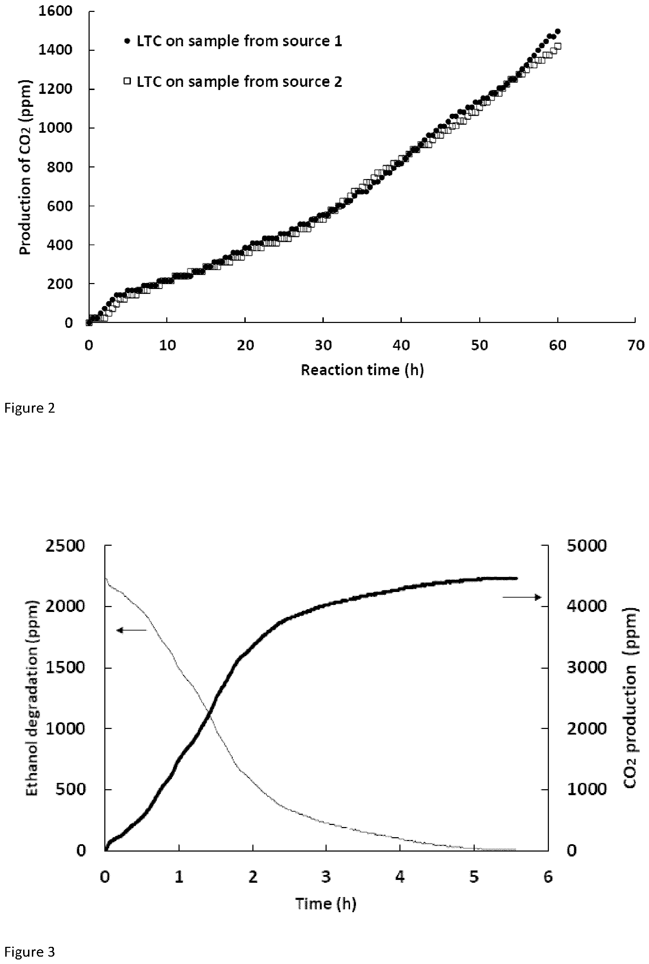

The performance of the Low Temperature Catalyst (LTC) supported on ceramic with 10 ppi was evaluated by photodegradation of ethanol through the kinetics of carbon dioxide (CO₂) formation. Figure 2 displays the CO₂ production as function of reaction time over the two samples.

The goal of the reaction is to convert the pollutant into harmless compounds (CO₂ and water). Hence, in this work, the efficiency of treatment is measured in terms of CO₂ production. Figure 2 demonstrates that the LTC immobilized on ceramic was able to degrade ethanol.

**Table 1 - Efficiency parameter (rate of CO2 production) for LTC supported on alumina ceramic.**

| **Rate of CO**₂ **production (ppm** of **CO₂/g_{cat} min)** | **LTC supported on ceramic with 10 ppi** | |
|---|---|---|
| | **Source 1** | **Source 2** |
| **Ethanol degradation** | 62.7 | 61.4 |

The catalyst immobilized on the ceramic degraded more than 90 % of ethanol into carbon dioxide.

### Conclusion

The data demonstrate the feasibility of alumina foam ceramic to immobilize the Calistair Low Temperature Catalyst (LTC) of WO 2021/130388 A1. Dip-coating technique was applied to immobilize the catalyst on the ceramic. High efficiency for ethanol degradation was detected over LTC + ceramic material.

Ceramic is an interesting material because it is an inert substrate with good immobilizing capacity for the catalyst. In addition, it remains stable at high temperatures (>500°C), therefore, it is possible to regenerate the catalyst by thermal treatment.

## Claims

1. Catalytic system comprising a catalytic composition and a carrier with
i) a catalytic composition comprising a mixture of
- a first catalyst having photo catalytic activity,
- a second catalyst, which is a different molecule than the first catalyst, being a low temperature catalyst, and
- an adsorbent, and
ii) a support being a porous ceramic catalyst carrier.

2. The catalytic system according to claim 1, wherein the support is a porous foamed ceramic carrier.

3. The catalytic system according to any one of the preceding claims, wherein the porous ceramic catalyst is an open porous catalyst, in particular, a catalyst supported on 10 or 20 ppi ceramic.

4. The catalytic system according to any one of the preceding claims, wherein the ceramic is an alumina ceramic.

5. The catalytic system according to any one of the preceding claims, wherein the support is an alumina foamed ceramic carrier.

6. The catalytic system according to any one of the preceding claims, wherein the first catalyst having photo catalytic activity is titanium dioxide TiO₂.

7. The catalytic system according to any one of the preceding claims, wherein the second catalyst being a low temperature catalyst is MnO.

8. The catalytic system according to any one of the preceding claims, wherein the adsorbent is a zeolite, in particular, zeolite A.

9. The catalytic system according to any one of the preceding claims, further comprising Carbon Nano Tube.

10. The catalytic system according to any one of the preceding claims, wherein the catalytic composition is a composition comprising in weight-% with regard to its total mass:
between 27 % and 30 % photo-activated titanium dioxide TiO₂,
between 11 % and 70 % of manganese monoxide MnO,
between 55 % and 59 % of synthetic hydrophilic zeolite of type A,
optionally, CNTs in amount of at most 5 weight-% based on the amount of the catalytic mixture.

11. Catalytic device comprising a catalytic system according to any one of claims 1 to 10.

12. Gas depolluting apparatus comprising a catalytic device according to claim 11 and/or a catalytic system according to any one of claims 1 to 10, wherein the catalytic device and/or the catalytic system is partially provided with a designated flow path of the gas to be depolluted, preferably, the gas depollution apparatus comprises at least one source of UV-radiation arranged in the designated flow path.

13. A use of the catalytic system according to any one of claims 1 to 10, the catalytic device according to claim 11 or the apparatus according to claim 12 for depollution of VOCsl.

14. A method for preparing a catalytic system according to any one of claims 1 to 10, comprising the step of providing the catalytic composition, coating the ceramic carrier with the solution containing the catalytic system and drying the same.
